# EUROPEAN PATENT SPECIFICATION

(11) **EP 1 523 206 B1**
(45) Date of publication and mention of the grant of the patent: **30.01.2008**
(21) Application number: 04255777.7
(22) Date of filing: 22.09.2004
(51) Int. Cl.: H04Q 7/36

(54) **Measurement using mobile probes comprising a measurement system model**
Messung durch mobile Sonden die ein Messsystemmodell beinhalten
Mesure avec des sondes mobiles comprenant un modèle de système de mesure

(30) Priority: 09.10.2003 US 682464
(43) Date of publication of application: 13.04.2005
(73) Proprietor: Agilent Technologies, Inc., Santa Clara, CA 95051 (US)
(72) Inventor: Kanevsky, Valery, San Lorenzo, CA 94580 (US); Eidson, John C., Palo Alto, CA 94303 (US)
(74) Representative: Powell, Stephen David

(56) References cited:
- GB-A- 2 344 026
- US-A- 5 398 276
- US-A- 5 481 588
- US-A1- 2003 055 604
- US-B1- 6 259 924
- "Portable Coverage Measurement System TS9951, For GSM900/1800/1900, ETACS/DECT/DAB/CDMA signalling parameters" RHODE&SCHWARZ PUBLICATION, October 1998 (1998-10), XP002220191
- "OPTIMIZING YOUR GSM NETWORK TODAY AND TOMORROW" ANNOUNCEMENT AGILENT TECHNOLOGIES, 2000, pages 1-16, XP002952157

## Description

The present application is related to co-pending European Patent Application 1424863.

The present invention is related generally to probing systems and methods and, more specifically, to systems and methods for measurement system performance optimization using mobile probes.

In traditional measurement systems, there are typically a finite number of fixed measurement devices, all known to and controlled by the measurement system. Generally such measurement devices are specifically configured and deployed for use by the measurement system at or as near as is practicable to a point at which measurement data is to be collected. When a set of measurements is to be made the system typically will download or otherwise configure each of these devices via whatever communication medium is provided, e.g., a measurement bus such as an IEEE-488 BUS, a local area network (LAN) connection, a serial link, or the like. The measurements are then made on command, periodically, or perhaps based on a time schedule. Depending on the sophistication of the devices, these measurements may be made by the device relatively independently from the rest of the measurement system. For example, a scheduled or periodic data collection, based on an internal device clock, perhaps synchronized to other clocks in the system may be made. Alternatively, devices may require an active command from the system for each measurement. The results typically are then delivered to the rest of the measurement system via the communication medium. Such measurement systems also typically include one or more processors or computers that execute control and analysis software for the measurement system to construct or modify a model of the measurements.

One of the key features of these existing systems is that the identity and location of each measurement device is known. Typically this information forms a basis for initiating control and for associating any resulting data with real world parameters being measured. Accordingly, the device identity, however represented, is often a pseudonym for the location of measurement and the resultant measure. Typically users of existing measurement systems know what instruments are available, what the instruments' locations are, how to access the instruments explicitly, and when data will be returned. Therefore, existing measurement systems are relatively closed.

Existing measurement systems employ spatial variables gleaned from dedicated instruments used to survey an environment variable. For example, a product known as WIZARD™, produced by AGILENT TECHNOLOGIES, made specifically for the wireless telephone industry, creates a model of the RF field strength around a cell tower or the like. Use of this product typically employs the use of dedicated instruments disposed in a vehicle, driven around to make spot measurements to verify and refine field strength data models. As another example, when the Environmental Protection Agency (EPA) is tracking a plume from a hazardous chemical spill, mobile air testing may be performed to derive a model of the plume.

Existing measurement systems typically employ a centralized location, away from the measurement devices, for data processing and model manipulation using the collected data. Therefore, a problem arises in that the collected data cannot be applied to the model at the point of measurement to improve the quality of the model or data collection, or to provide services related to model use. So software hosted by the measurement device, or the operator of the probe, cannot base their interaction or behavior on the subject measurement model. Typically the device does not have either any of the model or enough of it to make decisions. When trying to build models, the unavailability of model information at the measurement device can be a disadvantage.

The present invention is directed to systems and methods for improving the performance of distributed systems containing measurement probes in which some or all of the measurement probes are mobile, that is, not fixed at a given point in space. Embodiments of a performance optimized measurement system comprise at least one mobile measurement device hosting at least a portion of a measurement system model. The mobile measurement device is preferably enabled to evaluate a measurement taken by the mobile measurement device in light of the model for making a determination concerning the measurement, relative to the model. Embodiments of methods for measurement system performance optimization in accordance with the present invention include: augmenting the model using the measurements; directing a user of the mobile measurement device to a different location in response to the evaluation of the measurements; refining a location of the mobile measurement device using the model and the measurements; or determining one or more best modes of use of the mobile measurement device based on the measurements.

The above-mentioned European Patent application 1424863 discloses systems and methods for utilizing a pool of mobile devices in probing operations comprising a probing host system including probe management and data management operative aspects, and a pool of mobile devices, one or more of which are operative under control of the probe management to provide probing data to the data management, wherein the one or more mobile devices comprise mobile devices for which location and movement is not under control of the probing host system. There are a variety of candidate platforms for probes of this nature. Presently there are many potential measurement devices that move around, by virtue of the public carrying devices that have communication capabilities and measurement capabilities. Herein these measurement devices have been termed, mobile measurement devices (MMDs).

GB 2344026 discloses a mobile terminal incorporating a model used to predict the user's ability to receive a service signal based on location. US 2003/0055604 discloses a mobile computer incorporating a stored three-dimensional building drawing database. Data is entered into the database as a user walks around the building. US 6,259,924 discloses a system in which radio frequency signal propagation characteristics are periodically measured and analysed to produce a figure of merit.

The present systems and methods employ computational techniques based on measurements of physical variables by the measurement system, or accessible by the measurement system, via the measurement probes and on the spatial distribution of the underlying physical variables. Uses and computations for MMD data may include generation of a new model or improvement of existing models, spatial guidance to areas where a variable's value is more suitable for use by an application, and augmentation of a location service. It is also possible, based on a current model and its computed uncertainty and the statistics of the current data being collected, to compute which, if any, of these three uses are feasible, or to combine uses and/or models. Thus, in a region where the existing model is statistically very precise, such as may be determined from past history, either of the latter two modes of operation may be considered. On the other hand, if the model data for a region is of low quality, then the best use of the incoming data stream may be to refine the model.

The currently collected data and portion of the model resident on the MMD may be used to improve the model by measurement-based model generation or to guide some behavior, performance guidance based on a spatial model or the like. This may take the form of guiding MMD user actions to some goal or the like. Also, the model of some variable and a measurement of that variable may be used to refine a position. Various combinations of these three broad modes may be achieved in accordance with the present invention.

The foregoing has outlined rather broadly the features and technical advantages of the present invention in order that the detailed description of the invention that follows may be better understood. Additional features and advantages of the invention will be described hereinafter which form the subject of the claims of the invention. It should be appreciated by those skilled in the art that the conception and specific embodiment disclosed may be readily utilized as a basis for modifying or designing other structures for carrying out the same purposes of the present invention. It should also be realized by those skilled in the art that such equivalent constructions do not depart from the scope of the invention as set forth in the appended claims. The novel features which are believed to be characteristic of the invention, both as to its organization and method of operation, together with further objects and advantages will be better understood from the following description when considered in connection with the accompanying figures. It is to be expressly understood, however, that each of the figures is provided for the purpose of illustration and description only and is not intended as a definition of the limits of the present invention.

For a more complete understanding of the present invention, reference is now made to the following descriptions taken in conjunction with the accompanying drawing, in which:

FIGURE 1 is a diagrammatic environmental view of an embodiment of the present system;

FIGURE 2 is a flow chart of operation of an example of a measurement-based model generation and/or augmentation embodiment of the present invention;

FIGURE 3 is a flow chart of operation of an example of an embodiment of the present invention for performance guidance-based on a spatial model;

FIGURE 4 is a flow chart of operation of an example of an embodiment of the present invention for augmenting location determination based on a spatial model; and

FIGURE 5 is a flow chart an example of a determination of the use to which an MDD is to be put in accordance with the present invention.

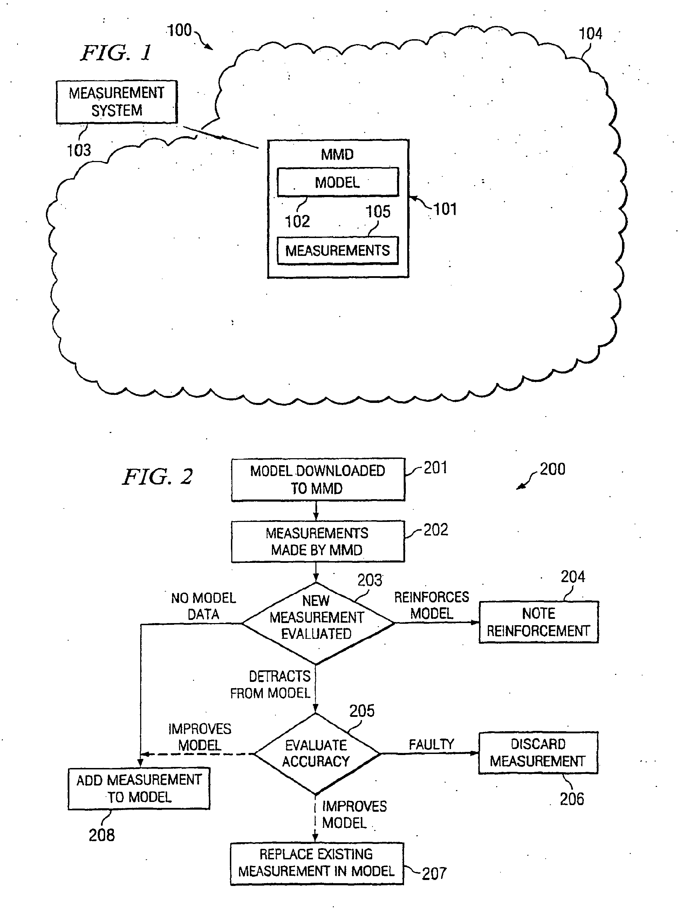

MMDs may be used to measure the value of a physical variable as a function of space and time either as their principal function or as a secondary function. The measurements are typically used for one of two purposes: to refine the understanding and to "compute" a model of the spatial temporal distribution of the measured physical variable; or to measure the value of the variable, particularly if the principal function of the device depends on the value of this variable as part of the operation of the device. Unlike existing models that reside at some central location and are inaccessible to an MMD except on a query basis, the present invention systems and methods (100), as depicted in FIGURE 1, enable MMD 101 to have either a partial or a total model 102 resident within device 101. This may be accomplished by giving MMD 101 a representation of the model. That partial representation might be, for example, geographic area 104 in which MMD 101 currently resides, or some approximation of the geographic area. Such a model may be a partial model because all the data for it has not been gathered yet. Model 102, and/or other code, may be placed on MMD 101 by a measurement system (103), such as the measurement system disclosed in the above-mentioned European application 1424863.
Also, in accordance with the present invention, MMD 101 may evaluate current measurements 105 and augment the portion of a model it has resident, and/or a central model, using current measurements 105. Model 102 resident on MMD 101 may be significantly compressed so that it is allowed to be used with a limited capability and capacity of the devices used as MMDs. With at least a portion of the model available within these devices that are being carried around in, from the point of view of overall measurement system 103, a random fashion, that portion of the model may be used to augment the behavior of device 101 or the device's user in various ways, for various purposes, some of which may be for the benefit of the user, others may be to benefit system 103.

Wireless phones may be the most prevalent example of possible MMDs, a device that has communication capabilities, increasingly common computational resources available for measurement applications, and measurement capability. In the example of a wireless phone, the measurement capability may be built in for measuring properties of the phone itself or the communications infrastructure, or the measurement capability may be external, such as a sensor interfaced with a wireless phone via a serial connection or the like. It is expected that such capabilities may be found in various other user devices including PDAs, cameras and calculators. There are also similar but less ubiquitous devices or collections of devices that may be combined, for use as measurement probe, such as telemetry sensors found in automobiles and other vehicles such as aircraft, including drones, free floating buoys, etc. Some common features of these devices include an ability to communicate at least on an intermittent basis with devices outside of themselves; an availability of some computational resources within the device to manage the measurement process; access either internally or externally to a measurement device; and the location and availability of a particular device at any given point in time may be determined either from the infrastructure or from some external source. RF monitoring and environmental monitoring are used herein as canonical examples. However, as will be appreciated by one of ordinary skill in the art, other conditions, vectors or the like may be monitored, modeled and used for decision criteria in accordance with the present invention.

As long as these devices are moving around they may be employed as mobile probes, if they are equipped with the appropriate software and hardware to make measurements of interest. However, these devices may not be dedicated devices and their use as mobile probes is preferably a secondary function. By way of example, wireless phones have an RF field strength meter built in for their own operation. A wireless phone measures the RF power received from a given transmitter. In normal operation of the phone, this measured power is used to determine which of several possible base stations the phone communicates with. Since that meter may be used to measure the strength of an RF field and since owners of cell phones move around and use their phones, effective coverage of RF field strength for a wireless phone system or cell tower may be measured using wireless phones as MMDs. On a statistical basis, if one waits long enough at least one cell phone will move into an area of interest. These measurements combined with similar measurements from other phones can also be used to refine the system operator's understanding of the RF coverage in a region, that is the spatial distribution of RF power from an antenna. As discussed above, "drive-by" testing may be employed to make RF measurements over specific routes, in part through the use of a cell phone to provide inputs to RF planning tools such as the aforementioned WIZARD™ product from AGILENT TECHNOLOGIES. In the case of the WIZARD™ product these measurements are used to adjust the free space parameters of a heuristic model. However, when using MMDs in accordance with the present invention, software may be downloaded to cell phones to provide other measurement related functionality.

In principle, MMDs can be used to measure any variable for which an appropriate sensor can be devised within the context of the MMD. In addition to other parameters of the communication infrastructure, measurements of user behavior or related variables may also be made. Other possibilities may include chemical sensors for toxins, biological sensors, physical sensors for noise levels, radiation, etc.

In accordance with the present invention, additional types of computations and uses may be applied to the data collected by MMDs beyond that discussed above. These techniques will primarily be discussed below in the context of RF coverage measurements but are equally applicable to any measured variable.

Existing RF field strength modeling for a cell system is typically based on a mixture of heuristic RF models combined with known terrain and antenna locations. It is possible, in accordance with the present invention, to generate purely measurement-based models to either replace the current models or to provide greater detail within a region. This may be particularly valuable in complex regions where the current modeling technology has difficulty such as within dense urban areas, sparsely covered remote areas, etc.

As discussed above, existing measurement systems centrally collect all data and then analyze that data at a later time to form a model. The present invention, given a measurement and the model, operates in real time. The present invention provides a manner of refining a model as data is collected, in an intelligent fashion, locally, without significant communication cost, by employing a portion of the subject model, resident on the MMD. Existing systems have not given measurement probes a picture of the thing being measured and criteria for improving the resulting model and allowing the devices to refine the model.

FIGURE 2 flowcharts an embodiment for measurement-based model generation 200. Embodiment 200 uses a model to improve the model. A partial model is downloaded to an MMD at 201 and made resident within the device. Thus, the device has some notion of what a variable, for example an RF field strength measurement, should look like as a function of space. Generally random measurements are made at 202, within an area of interest using the MMD. Each measurement preferably provides a variable of interest, such as a value of RF power from a particular antenna, at a point in space and time: Variable(x, y, z, t). At 203, the collected data is assembled, the measurements are compared to the resident model and a decision is made concerning what to do with the measurement for the purposes of augmenting the model. In some cases, the model may not have any data points, and thus measurements taken at 202 are initially taken with an immediate goal of improving the quality of this model at 203. A greedy algorithm may be applied at 203 to continuously generate/update a local spatial model of the underlying variable. Greedy algorithms take advantage of the fact that in many data models not all data is equally important. By way of specific example, a constant measurement, such as a constant RF field, in a certain area may be repetitive, but measurements to determine the boundaries of the area may be needed. Thus, few measurements are needed in the area of such a constant. To generalize, it may be found that in a model, such as for an approximation based on a number of measurements, nearly the same approximation can be obtained with much fewer measurement points, but specifically chosen points, the most representative points of the measurement location are desirable. Thus, one can significantly reduce the amount of data needed to build the same or about the same quality model.

For a model based on the n "most representative" locations out ofN available, a newly acquired point from 202 may be evaluated at 203 to see whether it reinforces or detracts from the statistical quality of the model. If it reinforces the model this is noted at 204; if the point detracts then it is evaluated further at 205 to decide whether to discard it at 206 as likely faulty or to replace one of the n values at 207 with the newly acquired point, particularly if such replacement would give a better model. Preferably n should be selected to meet quality requirements for the model. As a third alternative, the newly acquired point may just be added to the model at 208, particularly if no information exists for that location of the measurement. The model may be represented in the MMD as a collection of already measured data points or as some sort of functional description. In other words as a function of X and Y, for example, given X and Y an expected RF field strength, or the like, is provided. So now when a new measurement is made for a given location at 202 the MMD may look at the model and make some determination of the worth of the measurement at 203. So, for example, if fifty points have already been measured at the present location a measurement at 202 may not be considered as adding anything to the present model at 203. So when the new measurement is compared with what was predicted for this location by the model at 203 and it is roughly within a tolerance level for the model, the new measurement can be ignored at 206 because it does not add any information to the model.

At 203 and/or 205 a determination may be made that the new measurement fits in one of several categories, 204, 206, 207 or 208. The new measurement may or may not add new information to the model. Statistically at this particular location, if insufficient or too little data has been collected to reach the accuracy desired the new data may be treated as additional information at 208. If at the model predicts the value which was measured, it may be ignored at 206 and it is not added into memory or stored because the model already has the data. Alternatively, it could be that the data seems to disagree with the existing model, in which case a determination may be made at 205 as to whether the data is clearly new information, for example, through taking another measurement at the same location. If the new measurement violates significantly what the model predicts, it should, depending on the modeling paradigm, be included at 208 or included while excluding some other data point in the model which may become unnecessary, at 207. Advantageously, if the existing model does not predict the new value, but if the new value is included in the model at 207, something else may become predictable because some other data in the model is no longer necessary and may be removed at 207, thereby keeping the model limited in data size. Thus, the present invention may be used to improve existing models in an intelligent fashion starting with the premise that a model is in place with some analysis, and that model analysis can be used from a mathematical point of view to help incorporate new data, either by saying the measurement is not adding any significant benefit to this model, the measurements disagree with the model, or the measurement is a new point.

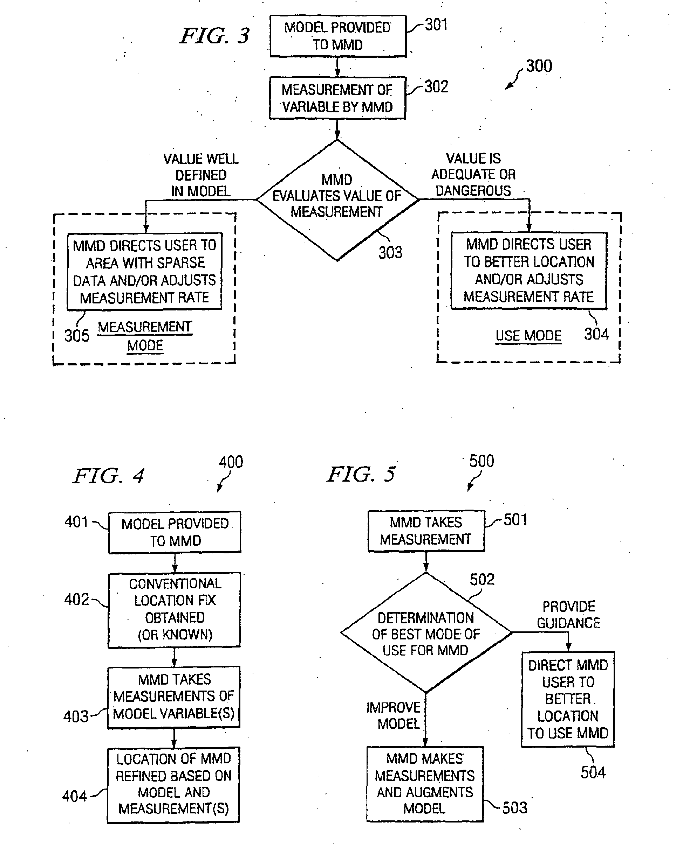

FIGURE 3 flowcharts an embodiment of the present invention for spatial model-based performance guidance 300. A model may be used to enable guiding of something, such as the measuring MMD. This guidance may be used to assist in the generation or the improvement of the model itself or for facilitating a primary purpose of the MMD, other than a measurement function. If a spatial and/or temporal measurement model already exists then that model may be downloaded to an MMD and used to guide the performance of the MMD, or its user, in ways other than customary uses, such as the handoff process related to field strength for wireless telephones. According to embodiments of the present invention, each MMD is provided with a computable form of a measurement model and/or other associated programming at 301, for internal use. The MMD may then preferably evaluate, at 303, the value of a variable measured at 302, e.g. RF power, at its current location. There may be certain actions the user of the MMD might wish to take based on what the model is finding through the measurements being taken. If the current value is not adequate then the spatial-temporal model can be used to direct the MMD, or its user, to a more favorable space-time point at 304, preferably over the "shortest" feasible path. If, for example, the MMD has a measurement program also resident, the MMD could observe the model and detect entry into a region where the data that has been previously collected is relatively sparse and it can augment the model at this point. For example, the MMD might observe the model has a lot of uncertainty in data at a location because data has not been collected in the area. So the software resident on the MMD may increase the rate at which data is collected. In a similar manner the model may be used for optimal route planning or for facilitating use of the MMD for a primary function. For example if the MMD is a wireless phone and the variable measured is RF Field strength, the user could be directed to move to a different location for better service. In a radiation or other hazardous condition monitoring mode, or the like, the directions provided could be to safer lower exposure areas.

In the context of RF drive test data collection, mode of operation 300 could lead to more efficient procedures for updating model parameters. For example, if while driving a pre-planned route it is observed at 303 that the current data being collected was repetitive and consistent with the current model. That is, an insignificant amount of new information was being learned. Then the MMD (drive-test vehicle) could be directed at 305 to a region where the model had less statistical reliability, such as an area of sparse data. This would allow more effective use of expensive drive test resources.

An MMD may be augmented to measure radiation levels or another hazardous condition or material. A desired behavior the device may demonstrate at 303, in accordance with the present invention, is that the model, possibly augmented by current measurements, may alert a user he or she is entering a dangerous area. This may be particularly useful in dealing with disaster response or military applications. If the MMD has a resident model of the dangerous conditions, versus space, then the model and/or related software may direct the user to a safer location or provide directions to lead the user out of the dangerous situation via the safest path, maybe not the shortest path, but the safest path using trip planning

Another application for embodiment 300 may be as a tracking function. This embodiment may be used to help track where a released substance is going. For example, where there has been a release of some pollutant or the like, someone may be sent to measure where the pollutant is and he or she may want to keep up with the pollutant so they can follow it to track it. So if an MMD operated by the user has a model, such as provided at 301, and the user is making measurements at 302, the user may be able to evaluate where he or she is located relative to a pollutant plume, or the like, at 303 . The model may indicate the plume should be going in a particular direction, the user can test that determination and the model software may confirm the plume is moving in that direction or not, and in combination with previous measurements, augment the model, as discussed above in relation to embodiment 200.

The model, based on current reading or other goals, may influence, for example, where the user goes, how fast the measurements are taken, or other parameters based on the model. Embodiment 300 uses the model information, and computing from it, provides guidance at 304 or 305 on some task that is being carried out by a MMD user, either to make more measurements, to go to a specific place, or carry out a task. Embodiment 300 is made possible by a model present in the MMD. This embodiment may also use a current measurement as an alarm alerting the user of the MMD to a danger, direct the user to carry out a task, or trigger an inquiry based on the model present in the MMD.

FIGURE 4 flowcharts an embodiment of augmenting location determination 400 based on a spatial model. An MMD is provided a computable version of a model that is deemed reliable at 401, wherein spatial gradients of the model variable are significantly well defined. The model may be used by the MMD to replace or augment other location defining devices or functions. A reliable model present in an MMD, for example a wireless phone with a mapping of the RF field strength in an area, may employ a measurement of a variable, such as the RF field strength, compared to the model to provide guidance as to a more exact location of the MMD and hence its user. A reasonable fix on location is obtained at 402 using conventional methods. Then location information may be refined through use of the model at 404 using one or more measurements taken at 403. Preferably, embodiment 400 may be used for any type of variable where a model has spatial gradients sufficient to differentiate position to the required accuracy.

Embodiment 400 provides a user an ability to locate and know where he or she is located relative to some variable that is being measured. For example, a person my be assigned to remain at some point on the aforementioned pollutant plume, such as someone who is to stay at the head of the plume. If this user momentarily loses track of where he or she is, they may make a measurement. A model of the plume may provide the most likely place that the user may be with respect to the distribution of this gaseous plume, based on that current measurement. As may be the case with this gaseous plume example, the model might not be a static model, it may be updated from some other source. Similarly, if a user is not in a mode of measuring for model enhancement, for example a user in a disaster response management mode or the like, updates to the model and use of current measurements may be used to tell the user where they are relative to the modeled event or situation.

FIGURE 5 flowcharts an embodiment for evaluating 500 data to determine which of the prior techniques is applicable. This embodiment may compare the previous three embodiments and decide which of the several modes may be the best use of the MMD depending on the situation. In an RF example, a wireless phone MMD, unbeknownst to the user, may, at 502, be comparing its model to measurements it is making at 501, to determine if measurements should be used to improve the model. Simultaneously, the MMD could provide guidance at 504 on a better place for the user to go to make a phone call or make a measurement. Both of these actions may be the most appropriate thing depending on some judgment based on the model made at 502 . However, as a further example, an application resident on the device may determine at 502 if the model is insufficient to provide advice at a location and may go into a mode where data is collected to improve the model at 505. On the other hand, if the model is relatively complete and accurate, guidance will preferably be provided at 504. Thereby multiple modes of using these models are provided in accordance with the present invention, any or all of which may be appropriate at any given point in time, or some modes may be ruled out by the quality of the data, or other factors, at 502. By way of example, while measuring the concentration of hydrogen using an adapted cell phone MMD, the present invention, based on a resident model, might disable the phone or otherwise warn the user to not use the phone MMD as a phone in an area of high hydrogen concentrations because such use might set the hydrogen off.

Therefore, the present invention may guide various forms of using the model and/or MMD, depending on the combination of the measurements and what the model predicts at one point or another (502). Guidance may be provided from whichever embodiment is appropriate, which mode should be used, such as, should a shift into the acquisition mode (503) be made or a shift into a use and device mode (504). So more complicated scenarios can be built based on having a model available to the MMD.

Furthermore, with the computational capability that is provided by current cell phones, PDAs and the like, multiple models may be resident on a device with multiple measurements being made by the device. So combinations of resident models and/or ongoing measurements are possible in accordance with the present invention. For example, the results of a phone coverage measurement versus the concentration of dangerous substance models may be used to refine a user inquiry for a better phone connection. Thus, when an RF coverage inquiry above might result in advice to move into a region of great danger, a combination of the two models might result in directions to a location of safety with the best available coverage. As another example, when measuring hazardous conditions, the communications at one point might not be very good but an RF model might be used to locate a best position from which to forward findings. Similar combinations that do not necessarily involve danger but that are more favorable from multiple points of view are contemplated. For example, a model that provides the density of restaurants as a function of position, and another model which gave the density of traffic as a function of position within one phone, could act as a guide for finding a restaurant without being caught in a traffic jam. In each of the above examples, both models could be resident on the wireless phone and in some cases collecting data that augments the models.

Although the present invention and its advantages have been described in detail, it should be understood that various changes, substitutions and alterations can be made herein without departing from the scope of the invention as defined by the appended claims. Moreover, the scope of the present application is not intended to be limited to the particular embodiments of the process, machine, manufacture, composition of matter, means, methods and steps described in the specification. As one of ordinary skill in the art will readily appreciate from the disclosure of the present invention, processes, machines, manufacture, compositions of matter, means, methods, or steps, presently existing or later to be developed that perform substantially the same function or achieve substantially the same result as the corresponding embodiments described herein may be utilized according to the present invention. Accordingly, the appended claims are intended to include within their scope such processes, machines, manufacture, compositions of matter, means, methods, or steps.

## Claims

1. A measurement system (100) comprising at least one mobile measurement device (101) hosting at least a portion of a measurement system model (102), said mobile measurement device being enabled to evaluate a measurement (105) taken by said mobile measurement device in light of said model for making a determination concerning said measurement, relative to said model, **characterised in that** the measurement device is enabled to direct a user of said mobile measurement device in accordance with said determination, and is enabled to augment said model using said measurement.

2. The system of claim 1 wherein said mobile measurement device (101) is enabled to direct a user of said mobile measurement device to a better location for use of said mobile measurement device for a primary purpose, based on said model.

3. The system of claim 1 or 2, wherein said mobile measurement device (101) is enabled to direct a user of said mobile measurement device to a safer location for said user based on said measurement.

4. The system of any preceding claim, wherein said mobile measurement device (101) is enabled to determine if said measurements are repetitive relative to said model, and said model measurement device is enabled to direct a user of said mobile measurement device to a location having sparse model data.

5. The system of any preceding claim, wherein said determination is a best mode of use of said mobile measurement device (101).

6. A measurement method (200) using mobile probes comprising:
providing a model to a mobile measurement device (201);
making measurements of model variables with said mobile measurement device (202);
evaluating, by said mobile measurement device, new measurements, using said model (203, 205); **characterised by** the steps of
using the results of said evaluating step to direct a user of said mobile measurement device; and
augmenting said model using said measurements (204, 207, 208).

7. A method according to claim 6, wherein the user is directed to a different location.

8. A method according to claim 7, wherein the user is directed to a better location for use of said mobile measurement device (201) for a primary purpose.

9. A method according to claim 7, wherein the user is directed to a safer location.

10. A measurement method (500) according to any of claims 6 to 9 comprising the further step of:
determining a best mode of use of said mobile measurement device based on said measurements (502).

## Patentansprüche

1. Ein Messsystem (100), das zumindest eine mobile Messvorrichtung (101) aufweist, die zumindest einen Abschnitt eines Messsystemmodells (102) aufnimmt, wobei die mobile Messvorrichtung aktiviert ist, un angesichts des Modells eine Messung (105), die durch die mobile Messvorrichtung vorgenommen wird, auszuwerten zum Vornehmen einer Bestimmung, die die Messung betrifft, relativ zu dem Modell, **dadurch gekennzeichnet, dass** die Messvorrichtung aktiviert ist, um einen Benutzer der mobilen Messvorrichtung gemäß der Bestimmung zu leiten, und aktiviert ist, um das Modell unter Verwendung der Messung zu verstärken.

2. Das System gemäß Anspruch 1, bei dem die mobile Messvorrichtung (101) aktiviert ist, um einen Benutzer der mobilen Messvorrichtung zu einer besseren Stelle für eine Verwendung der mobilen Messvorrichtung für einen primären Zweck basierend auf dem Modell zu leiten.

3. Das System gemäß Anspruch 1 oder 2, bei dem die mobile Messvorrichtung (101) aktiviert ist, um einen Benutzer der mobilen Messvorrichtung zu einer für den Benutzer sichereren Stelle basierend auf der Messung zu leiten.

4. Das System gemäß einem der vorhergehenden Ansprüche, bei dem die mobile Messvorrichtung (101) aktiviert ist, um zu bestimmen, ob sich die Messungen wiederholen, relativ zu dem Modell, und die Modelmessvorrichtung aktiviert ist, um einen Benutzer der mobilen Messvorrichtung zu einer Stelle zu leiten, die spartiche Modelldaten aufweist.

5. Das System gemäß einem der vorhergehenden Ansprüche, bei dem die Bestimmung ein bester Modus einer Verwendung der mobilen Messvorrichtung (101) ist.

6. Ein Messverfahren (200), das mobile Sonden verwendet und folgende Schritte aufweist:
Liefern eines Modells an eine mobile Messvorrichtung (201);
Vornehmen von Messungen von Modellvariablen mit der mobilen Messvorrichtung (202);
Auswerten von neuen Messungen durch die mobile MessVorrichtung unter Verwendung des Modells (203, 205);
**gekennzeichnet durch** die Schritte eines
Verwendens der Ergebnisse des Auswertungsschrittes, um einen Benutzer der mobilen Messvorrichtung zu leiten; und
Verstärkens des Modells unter Verwendung der Messungen (204, 207, 208).

7. Ein Verfahren gemäß Anspruch 6, bei dem der Benutzer zu einer urterschiedlichen Stelle geleitet wird.

8. Ein Verfahren gemäß Anspruch 7, bei dem der Benutzer zu einer besseren Stelle für eine Verwendung der mobilen Messvorrichtung. (201) für einen primären Zweck geleitet wird.

9. Ein Verfahren gemäß Anspruch 7, bei dem der Benutzer zu einer sichereren Stelle geleitet wird.

10. Ein Messverfahren (500) gemäß einem der Ansprüche 6 bis 9, das den folgenden weiteren Schritt aufweist:
Bestimmen eines besten Modus einer Verwendung der mobilen Messvorrichtung basierend auf den Messungen (502).

## Revendications

1. Système de mesure (100) comprenant au moins un dispositif de mesure mobile (101) hébergeant au moins une partie d'un modèle de système de mesure (102), ledit dispositif de mesure mobile pouvant évaluer une mesure (105) prise par ledit dispositif de mesure mobile à la lumière dudit modèle pour effectuer une détermination concernant ladite mesure, par rapport audit modèle, **caractérisé en ce que** le dispositif de mesure peut diriger un utilisateur dudit dispositif de mesure mobile en fonction de ladite détermination, et peut augmenter ledit modèle à l'aide de ladite mesure.

2. Système selon la revendication 1, dans lequel ledit dispositif de mesure mobile (101) peut diriger un utilisateur dudit dispositif de mesure mobile vers un meilleur emplacement pour l'utilisation dudit dispositif de mesure mobile pour un premier objectif, en fonction dudit modèle.

3. Système selon la revendication 1 ou 2, dans lequel ledit dispositif de mesure mobile (101) peut diriger un utilisateur dudit dispositif de mesure mobile vers un emplacement plus sûr pour ledit utilisateur, en fonction de ladite mesure.

4. Système selon l'une quelconque des revendications précédentes, dans lequel ledit dispositif de mesure mobile (101) peut déterminer si lesdites mesures sont répétitives par rapport audit modèle, et ledit dispositif de mesure de modèle peut diriger un utilisateur dudit dispositif de mesure mobile vers un emplacement ayant des données de modèle peu abondantes.

5. Système selon l'une quelconque des revendications précédentes, dans lequel ladite détermination est un meilleur mode d'utilisation dudit dispositif de mesure mobile (101).

6. Procédé de mesure (200) à l'aide de sondes mobiles, comprenant les étapes consistant à :
prévoir un modèle pour un dispositif de mesure mobile (201) ;
prendre des mesures de variables de modèle avec ledit dispositif de mesure mobile (202) ;
évaluer de nouvelles mesures, par ledit dispositif de mesure mobile, à l'aide dudit modèle (203, 205) ;
**caractérisé par** les étapes consistant à :
utiliser les résultats de ladite étape d'évaluation pour diriger un utilisateur dudit dispositif de mesure mobile ; et
augmenter ledit modèle à l'aide desdites mesures (204, 207, 208).

7. Procédé selon la revendication 6, dans lequel l'utilisateur est dirigé vers un emplacement différent.

8. Procédé selon la revendication 7, dans lequel l'utilisateur est dirigé vers un meilleur emplacement pour l'utilisation dudit dispositif de mesure mobile (201) pour un premier objectif.

9. Procédé selon la revendication 7, dans lequel l'utilisateur est dirigé vers un emplacement plus sûr.

10. Procédé de mesure (500) selon l'une quelconque des revendications 6 à 9, comprenant l'étape supplémentaire consistant à :
déterminer un meilleur mode d'utilisation dudit dispositif de mesure mobile en fonction desdites mesures (502).
